(19) Europäisches Patentamt
European Patent Office
Office européen des brevets

(11) **EP 0 929 795 B1**

(12) **FASCICULE DE BREVET EUROPEEN**

(45) Date de publication et mention
de la délivrance du brevet:
**19.11.2003 Bulletin 2003/47**

(21) Numéro de dépôt: **97919132.7**

(22) Date de dépôt: **19.09.1997**

(51) Int Cl.⁷: **G01D 5/244**, G01P 3/48,
G01P 13/04

(86) Numéro de dépôt international:
**PCT/FR97/01660**

(87) Numéro de publication internationale:
**WO 98/014756 (09.04.1998 Gazette 1998/14)**

(54) **CIRCUIT DE MULTIPLICATION DE RESOLUTION ET DE DETERMINATION DE SENS DE DEPLACEMENT**

SCHALTUNG ZUR VERVIELFACHUNG DER AUFLÖSUNG UND BESTIMMUNG DER RICHTUNG DER LAGEVERÄNDERUNG

CIRCUIT FOR MULTIPLYING RESOLUTION AND DETERMINING DIRECTION OF DISPLACEMENT

(84) Etats contractants désignés:
**AT DE ES FR GB IT**

(30) Priorité: **30.09.1996 FR 9611893**

(43) Date de publication de la demande:
**21.07.1999 Bulletin 1999/29**

(73) Titulaire: **SNR ROULEMENTS**
**F-74010 Annecy (FR)**

(72) Inventeurs:
• **PEILLOUD, Fernand**
**(FR)**

• **BOCHET, Alain**
**F-74600 Seynod (FR)**

(74) Mandataire: **Ballot, Paul**
**Cabinet Ballot**
**122, rue Edouard Vaillant**
**92593 Levallois-Perret Cedex (FR)**

(56) Documents cités:
**EP-A- 0 148 518**    **EP-A- 0 220 547**
**EP-A- 0 684 455**    **DE-A- 1 945 206**

**Description**

L'invention concerne un circuit de multiplication de la résolution de signaux électriques, particulièrement émis par des capteurs de vitesse et de déplacement.

Les capteurs de vitesse ou de déplacement sont généralement réalisés à partir d'un codeur magnétique multipolaire mobile et d'un capteur à sortie digitale à effet Hall ou à magnétorésistance, et présentent une faible résolution.

Actuellement, un premier procédé connu pour augmenter la résolution des capteurs de vitesse ou de déplacement consiste à diminuer la longueur de la période polaire du codeur. Cependant, l'augmentation du nombre de périodes ainsi obtenu est limitée par l'affaiblissement du champ magnétique disponible vu par le capteur, affaiblissement que l'on doit alors compenser en diminuant l'entrefer entre le capteur et le codeur. Pour des raisons de disponibilités d'espace, cette compensation n'est pas toujours possible, ou bien oblige à augmenter la précision de l'assemblage des pièces mettant en relation le capteur et le codeur, ce qui entraine un surcoût de réalisation.

Un second procédé connu consiste à ajouter des capteurs digitaux supplémentaires dans l'intervalle d'une période magnétique du codeur, qui fournissent un nombre élevé d'indications digitales de sortie. Ce procédé est limité par la place disponible, et induit une augmentation du coût de réalisation. De plus, lors des élévations de température, les dérives différenciées des points de commutation des capteurs digitaux conduisent à des signaux de sortie peu précis, voire aberrants, ce qui entraîne une diminution de la fiabilité.

La demande de brevet européen EP 0684 455 A1, au nom de S.N.R. ROULEMENTS, décrit un multiplicateur de résolution utilisant deux capteurs analogiques positionnés à 90 degrés électriques, munis de moyens de maintien de maxima et de minima et de moyens de génération de seuils à partir des valeurs maximales et minimales. Ce procédé n'est opérationnel que lorsque les signaux vus par les capteurs ont au moins atteint ces valeurs extrêmes, de sorte qu'à la mise en route du dispositif multiplicateur, aucun signal de sortie n'est valide. Un autre inconvénient de ce procédé apparaît pendant les déplacements à vitesse très lente, au cours desquels les moyens de maintien des maxima et des minima, constitués de dispositifs à constante de temps, n'assurent pas leurs fonctions de façon satisfaisante.

Le but de la présente invention est de pallier ces inconvénients, en proposant un dispositif de multiplication de résolution et de détermination du sens de déplacement d'un capteur de vitesse et de déplacement, constitué par un codeur magnétique multipolaire mobile en face d'au moins deux capteurs analogiques fixes, délivrant des signaux sinusoïdaux d'amplitudes maximales égales, centrés sur une même valeur de référence, déphasés de $\pi/2$ radians électriques, caractérisé en ce qu'il comprend :

- des moyens de génération de 2n signaux sinusoïdaux $S_i$, de même amplitude, de même valeur de centrage que les signaux délivrés par les capteurs analogiques, déphasés de $\pi/n$ les uns par rapport aux autres;
- des moyens de multiplexage analogique des 2n signaux $S_i$ délivrant un signal S constitué par la succession de 2n portions de signaux $S_i$ déphasés de $\pi/n$ et dont l'amplitude est comprise entre deux valeurs:

$$A * \sin(-\pi/2n) \text{ et } A * \sin(\pi/2n);$$

- des moyens de saisie de l'enveloppe maximale E des 2n signaux $S_i$;
- des premiers et des seconds moyens de génération de respectivement (2m-1) seuils $(L_i)$ et $(-L_i)$ et 2m seuils $(L_j)$ et $(-L_j)$ de commutation proportionnels à l'enveloppe E;
- des premiers et seconds moyens de comparaison du signal S avec respectivement chacun des seuils $(L_i)$, $(-L_i)$ et $(L_j)$, $(-L_j)$ issus des premiers et seconds moyens de génération, délivrant des signaux binaires $A_i$ et $B_j$;
- des premiers et des seconds moyens de combinaison des signaux binaires $A_i$ et $B_j$ délivrant respectivement un signal $V_1$ et $V_2$, constitués chacun de 2m*n périodes d'angles de valeur $\pi/m*n$, décalés angulairement de $\pi/4m*n$.

Selon une autre caractéristique de l'invention, les premiers moyens de génération de seuils de commutation génèrent (2m-1) seuils $L_i$ définis par la formule :

$$L_i = \pm E * tg[\pi/2n * 2a/2m]$$

m étant un nombre entier positif choisi en fonction de la résolution finale désirée, et a étant un nombre entier positif prenant toutes les valeurs entre 0 et (m-1) et représentant chacun des 2m-1 seuils $L_i$ de commutation.

Selon une autre caractéristique de l'invention, les seconds moyens de génération de seuils de commutation génèrent 2m seuils $L_j$ définis par la formule :

$$L_j = \pm E * tg[\pi/2n * (2a+1)/2m]$$

m étant un nombre entier positif choisi en fonction de la résolution finale désirée, et a étant un nombre entier positif prenant toutes les valeurs entre 0 et (m-1) et représentant chacun des 2m seuils $L_j$ de commutation.

D'autres caractéristiques et avantages de l'invention apparaîtront à la lecture de la description d'un exemple de réalisation du dispositif illustrée par les figures suivantes qui sont :

- la figure 1 : un schéma électronique fonctionnel d'un dispositif selon l'invention;
- les figures 2 à 6, et 8 à 12 : des représentations graphiques des signaux issus des blocs fonctionnels du dispositif de la figure 1;
- les figures 7 et 13 : des représentations graphiques des signaux haute résolution en sortie du dispositif selon l'invention.

L'invention propose la réalisation d'un dispositif de multiplication de résolution d'un codeur magnétique multipolaire, de type à effet hall ou à magnétorésistance par exemple, utilisant au moins deux capteurs analogiques fixes, déphasés électriquement de $\pi/2$ radian en relation avec les polarités du codeur, dont les signaux sinusoïdaux, de même amplitude, sont centrés sur la même valeur de décalage d'origine prise comme zéro de référence.

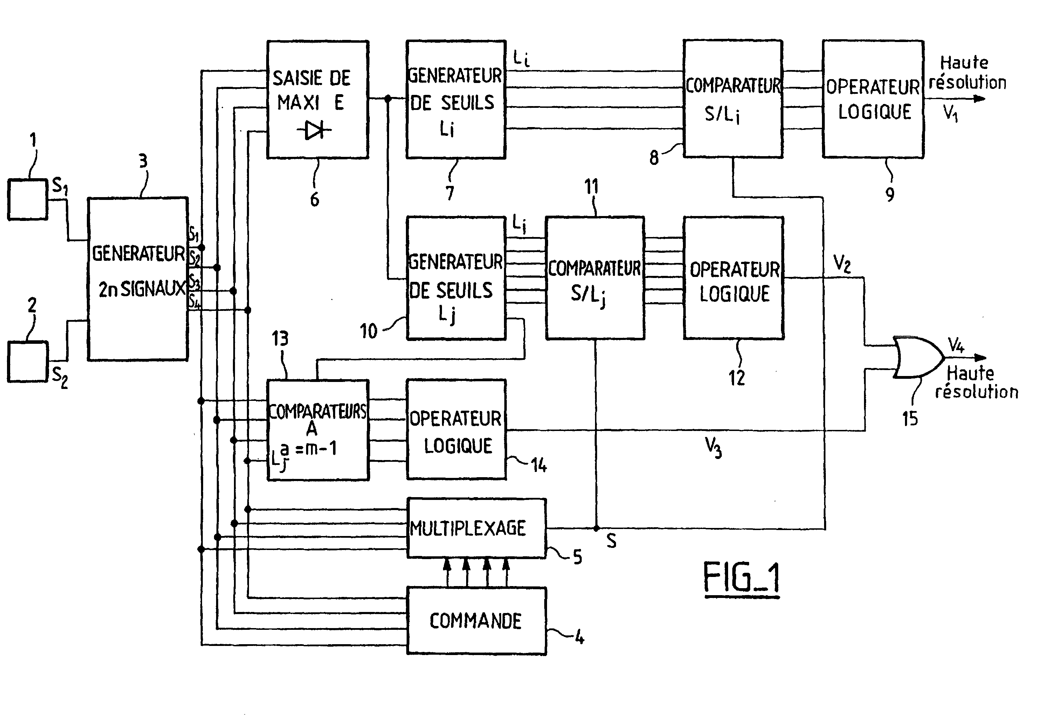

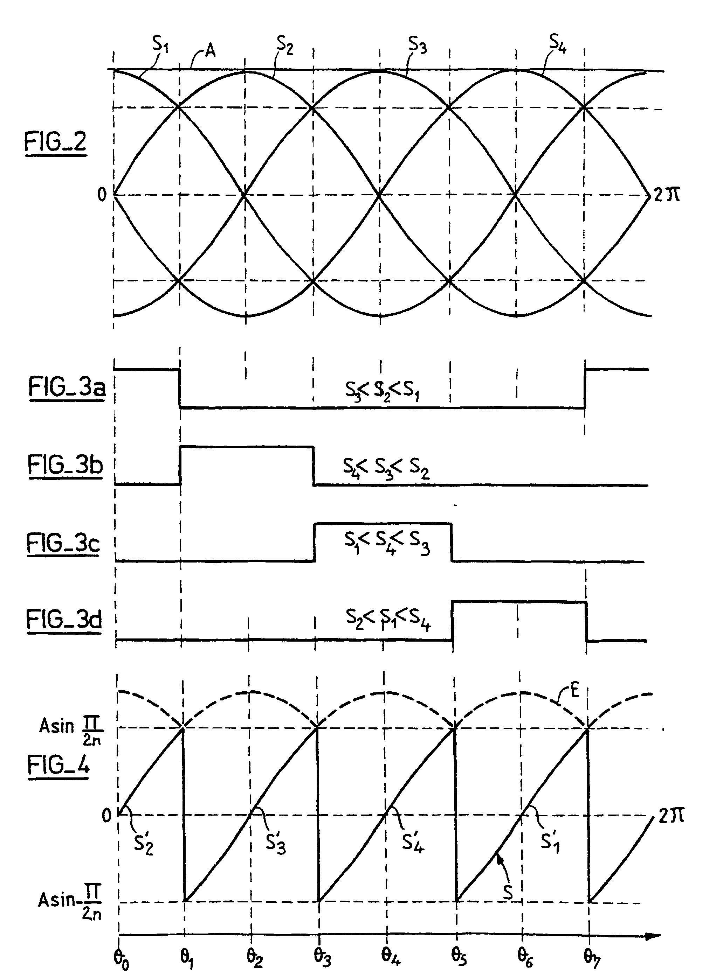

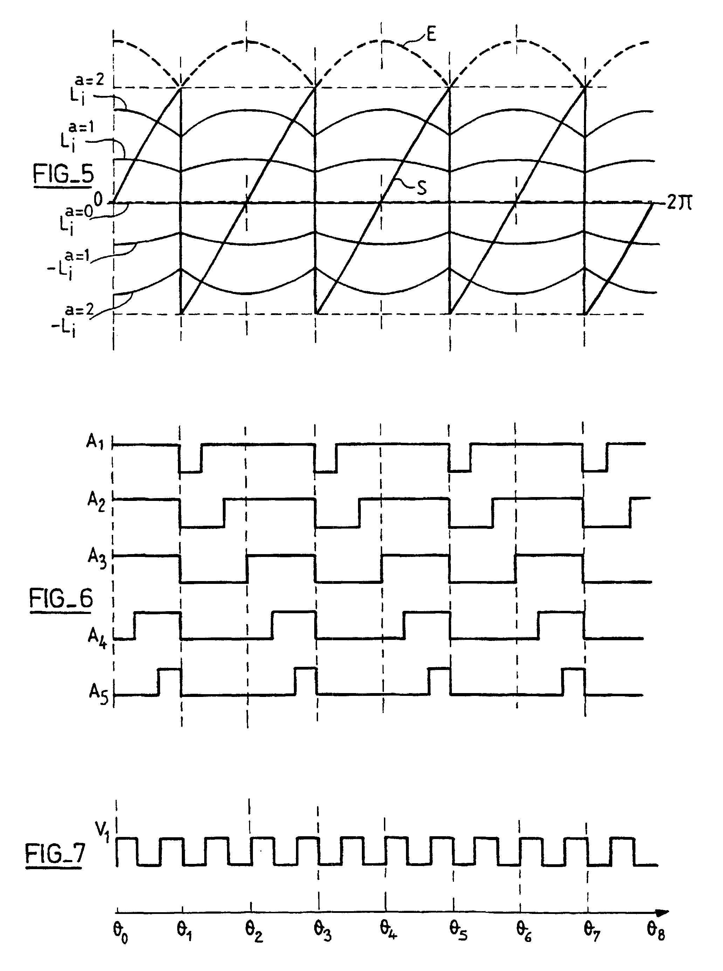

Comme le montre la figure 1 qui est un schéma électronique fonctionnel d'un dispositif selon l'invention, les capteurs analogiques 1 et 2 envoient des signaux sinusoïdaux $S_1$ et $S_2$ respectivement, de même amplitude A, de même période P et déphasés électriquement de $\pi/2$ radian, sur l'entrée de moyens 3 de génération d'un nombre égal à 2n signaux sinusoïdaux, n étant un nombre entier positif égal ou supérieur à 2, dans un intervalle électrique égal à $2\pi$ radians. Les figures 2 à 7 sont les représentations graphiques des signaux délivrés par les blocs fonctionnels du dispositif selon la figure 1, en fonction de la position angulaire $\Theta$ du codeur par rapport aux capteurs, dans l'exemple particulier non limitatif où n est égal à 2. La figure 2 représente les 2n signaux sinusoïdaux, référencés $S_i$ avec i compris entre 1 et 4, qui ont la même amplitude A et la même période $P = 2\pi$ que les signaux $S_1$ et $S_2$ issus des deux capteurs, sont centrés sur la même valeur servant de zéro de référence et sont déphasés électriquement deux à deux consécutivement de $\pi/n$ radian, soit $\pi/2$. Le signe du déplacement du codeur magnétique est fixé définitivement en identifiant la succession des signaux sinusoïdaux apparaissant pour un sens de déplacement de 0 à $2\pi$ radians choisis conventionnellement par rapport aux situations géométriques des deux capteurs analogiques 1 et 2.

Les 2n signaux sinusoïdaux $S_i$, i étant un nombre entier compris entre 1 et 2n, issus des moyens 3 de génération, sont envoyés sur des moyens 4 de comparaison de la valeur instantanée de chacun des signaux à chacune des (2n-1) autres valeurs instantanées de ces signaux. Ces moyens 4 de comparaison sont connectés à des moyens 5 de multiplexage analogique des 2n voies attribuées à chacun des 2n signaux sinusoïdaux issus des moyens 3 de génération. Les moyens 4 de comparaison servent de commande de commutation aux moyens 5 de multiplexage, qui commutent successivement d'un signal identifié au signal identifié suivant, déphasé de $\pi/n$, dès que leurs valeurs absolues respectives sont égales. Ainsi, le signal résultant S est constitué par la succession de 2n portions de signaux déphasés de $\pi/n$ dans l'intervalle électrique $(0,2\pi)$, dont l'amplitude est comprise entre deux valeurs qui sont :

$$A * \sin(-\pi/2n) \text{ et } A * \sin(\pi/2n).$$

Les figures 3a à 3d sont les signaux issus des moyens 4 de comparaison dans l'exemple particulier de 4 signaux $S_1$ à $S_4$ comparés successivement les uns aux autres. Ainsi, le signal de la figure 3a correspond à la détection de la valeur du signal $S_2$ supérieure à la valeur du signal $S_3$ et inférieur à la valeur du signal $S_1$, entre les angles $\theta_0=0$ et $\theta_1=\pi/4$ d'une part, et $\theta_7=7\pi/4$ et $\theta_8=2\pi$ d'autre part, de l'intervalle angulaire $(0,2\pi)$, de telle sorte que seule la voie des moyens de multiplexage dédiée au signal $S_2$ est activée. La figure 3b correspond à l'intervalle électrique entre $\theta_1=\pi/4$ et $\theta_3=3\pi/4$, pendant lequel $S_3$ est supérieur à $S_4$ et inférieur à $S_2$, afin que seule la voie dédiée au signal $S_3$ soit activée. La figure 3c correspond à l'intervalle électrique entre $\theta_3=3\pi/4$ et $\theta_5=5\pi/4$, pendant lequel $S_4$ est supérieur à $S_1$ et inférieur à $S_3$, activant alors la voie dédiée au signal $S_4$, et enfin la figure 3d correspond à l'intervalle électrique entre $\theta_5=5\pi/4$ et $\theta_7=7\pi/4$, pendant lequel $S_1$ est supérieur à $S_2$ et inférieur à $S_4$, pour activer la voie dédiée au signal $S_1$. On constate que cette commande n'intervient que pour un seul intervalle représentant un angle électrique de $\pi/n$, soit $\pi/2$ dans cet exemple, sur la période $(0,2\pi)$.

Les 2n sorties des moyens 5 de multiplexage sont connectées en parallèle, c'est pourquoi le signal S en sortie est constitué par une succession de 2n signaux $S_i'$, correspondant chacun à un des signaux Si. Dans le cas particulier où n=2, le signal S est constitué, dans l'intervalle angulaire $(0,2\pi)$, des quatre portions $S'_1$ à $S'_4$ appartenant chacune à un des quatre signaux $S_1$ à $S_4$, dont l'amplitude est comprise entre $A * \sin(-\pi/4)$ et $A * \sin(\pi/4)$, reliées de proche en proche par des transitoires de commutation figurés en ligne verticale comme le montre la figure 4.

Simultanément, les moyens 3 générateurs des 2n signaux $S_i$ déphasés de $\pi/n$ sont connectés à des moyens 6 de saisie de la valeur instantanée de l'enveloppe maximale E de ces 2n signaux constituée par la valeur instantanée la plus élevée des signaux.

A partir de cette enveloppe E, des moyens 7 de génération de seuils produisent une première série $L_i$ de seuils de commutation, proportionnels à l'enveloppe E et définis par la formule (1) :

$$(1) \; L_i = E * tg[\pi/2n * 2a/2m]$$

avec m: nombre entier positif choisi en fonction de la résolution finale désirée,

et a: nombre entier positif prenant toutes les valeurs de 0 à (m-1).

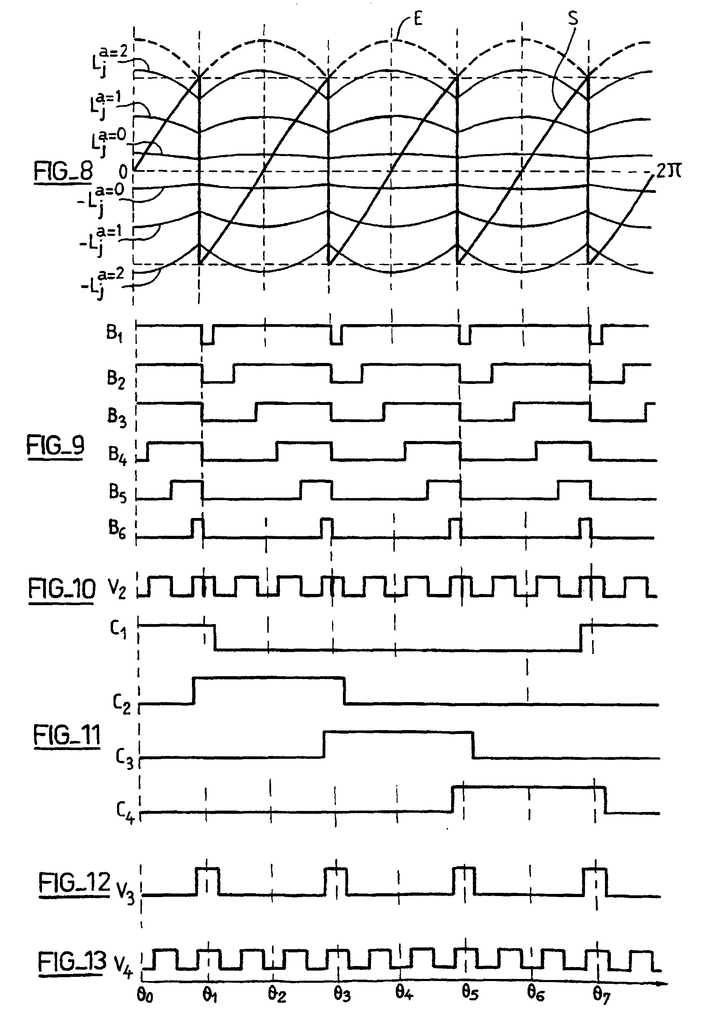

Ils produisent également une seconde série $-L_i$ de seuils de commutation symétriques des seuils $L_i$ par rapport au zéro de référence, qui est la valeur de centrage des signaux sinusoïdaux d'origine. La figure 5 est une représentation graphique du signal S issu des moyens de multiplexage, selon l'exemple non limitatif de réalisation où n est égal à 2 et m est égal à 3, et des 2m-1=5 seuils $L_i$ et $-L_i$ qui sont égaux à:

$$L_i^{a=2} = E^*tg\pi/6$$

$$L_i^{a=1} = E^*tg\pi/12$$

$$L_i^{a=0} = 0$$

$$- L_i^{a=1} = -E^*tg\pi/12$$

$$- L_i^{a=2} = -E^*tg\pi/6$$

Le signal S est compris entre une succession de domaines bornés par les seuils de commutation: $[S < -L_i^{a=m-1}]$ ; $[-L_i^{a=m-1} < S < -L_i^{a=m-2}]$ ;...; $[L_i^{a=m-2} < S < L_i^{a=m-1}]$ ; $[L_i^{a=m-1} < S]$

et à chacun desquels on affecte définitivement une valeur binaire, différente de ses voisins immédiats, égale à 0 quand la valeur instantanée du signal S est inférieure à la valeur des seuils et égale à 1 quand cette valeur est supérieure à ces mêmes valeurs de seuils.

Pour cela, des moyens 8 de comparaison connectés en sortie des moyens 7 de génération de seuils, comparent la valeur instantanée du signal S, appartenant à la succession des 2n portions de signaux déphasés de $\pi/n$, dans l'intervalle électrique $(0,2\pi)$, à la valeur des seuils de commutation $-L_i$ et $L_i$ pris dans leur ordre croissant de valeurs et délivrent 2m-1 signaux carrés Ai, i étant un entier valant de 1 à 2m-1, soit de A1 résultant de la comparaison du signal S avec le seuil $-L_i^{a=m-1}$, à $A_{2m-1}$ résultant de la comparaison du signal S avec le seuil $L_i^{a=m-1}$, qui prennent respectivement la valeur 0 quand la valeur du signal S est inférieure à la valeur du seuil considéré et la valeur 1 quand la valeur instantanée du signal S est supérieure à cette même valeur de seuil. Puis les 2m-1 signaux délivrés par les moyens 8 de comparaison sont combinés par un opérateur logique 9 effectuant l'opération Booléenne suivante:

$(A_1$ ET NON $A_2)$ OU $(A_3$ ET NON $A_4)$... ... OU $(A_{2m-3}$ ET NON $A_{2m-2})$ OU $A_{2m-1}$ qui produit, sur une première voie de sortie du dispositif de multiplication de résolution, un signal de sortie $V_1$ haute résolution composé d'un nombre 2m*n périodes d'un signal carré, dans l'intervalle d'une période P égale à $(0,2\pi)$ du signal envoyé par un des capteurs analogiques 1 ou 2 et comprend alternativement des états hauts et des états bas, chacun de valeur angulaire égale à $\pi/2m^*n$.

Dans l'exemple particulier où n est égal à 2 et m est égal à 3, les moyens 8 de comparaison délivrent 2m-1 signaux carrés $A_i$, avec i entier allant de 1 et 5, représentés graphiquement par la figure 6, qui prennent la valeur 0 quand la valeur instantanée du signal S est inférieure respectivement à la valeur des seuils $-L_i^{a=2}$, $-L_i^{a=1}$, 0, $L_i^{a=1}$, $L_i^{a=2}$, et la valeur 1 quand cette valeur instantanée est supérieure respectivement à ces mêmes valeurs de seuils. Ces moyens de génération de seuils peuvent être réalisées par des diviseurs de tension. Et l'opération Booléenne :

$(A_1$ ET NON $A_2)$ OU $(A_3$ ET NON $A_4)$ OU $A_5$ produit le signal de sortie $V_1$ haute résolution représenté sur la figure 7.

En même temps que la génération des premiers seuils de commutation $L_i$ et $-L_i$ par les moyens 7, des moyens 10 de génération délivrent à partir de l'enveloppe maximale E des signaux $S_i$, deux autres séries de seuils $L_j$ et $-L_j$, situés angulairement chacun au milieu de deux seuils consécutifs $L_i$, afin d'obtenir, sur une seconde voie de sortie, un signal haute résolution en quadrature avec celui $V_1$ de la première voie. La valeur de ces seuils est exprimée par la formule suivante (2):

$$(2)\ L_j = E * tg[\pi/2n * (2a+1)/2m]$$

a et m ayant la même définition que pour les seuils $L_i$. Le paramètre a prenant toutes les valeurs de 0 à (m-1), il y a un nombre égal à 2m seuils qui sont, dans le cas où n=2 et m=3 :

$$L_j^{a=2} = E^*tg5\pi/24$$

$$L_j^{a=1} = E^*tg\pi/8$$

$$L_j^{a=0} = E^*tg\pi/24$$

$$-L_j^{a=1} = -E^*tg\pi/24$$

$$-L_j^{a=2} = -E^*tg\pi/8$$

$$-L_j^{a=2} = -E^*tg5\pi/24$$

Le signal S, ainsi que l'enveloppe maximale E des signaux $S_i$ avec les différents seuils $L_j$, sont représentés sur la figure 8. Les seuils $-L_j$ sont symétriques

des seuils $L_j$ par rapport au zéro de référence des signaux sinusoïdaux $S_1$ et $S_2$ d'origine.

Comme précédemment, les seuils de commutation $L_j$ encadrent des domaines successifs du signal S: $[S < -L_j^{a=m-1}]$ ; $[-L_j^{a=m-1} < S < -L_j^{a=m-2}]$ ;...; $[L_j^{a=m-2} < S < L_j^{a=m-1}]$ ; $[L_j^{a=m-1} < S]$ à chacun desquels est affecté définitivement une valeur binaire, 0 ou 1, différente de celle des deux domaines situés de part et d'autre.

Le signal S issu des moyens 5 de multiplexage est comparé, dans des moyens 11 de comparaison, à la valeur de chacun des 2m seuils de commutation $L_j$ et $-L_j$ , pris dans leur ordre croissant de valeurs, qui délivrent un nombre de signaux $B_j$ égal à 2m, soit les signaux allant de $B_1$ résultant de la comparaison du signal S avec le seuil $-L_j^{a=m-1}$ à $B_{2m}$ résultant de la comparaison du signal S avec le seuil $L_j^{a=m-1}$, qui prennent respectivement la valeur 0 quand la valeur instantanée du signal S est inférieure respectivement à la valeur du seuil considéré et une valeur égale à 1 quand cette valeur instantanée est supérieure à cette même valeur seuil.

Les 2m signaux $B_j$ délivrés par les moyens 11 de comparaison sont envoyés sur un opérateur logique 12 effectuant l'opération Booléenne suivante:

(NON $B_1$) OU ($B_2$ ET NON $B_3$)... OU ($B_{2m-2}$ ET NON $B_{2m-1}$) OU $B_{2m}$ qui produit un signal haute résolution $V_2$, de période identique au signal $V_1$, déphasé de celui-ci d'une valeur angulaire de $\pi/2m*2n$.

Dans le cas particulier où n est égal à 2 et m est égal à 3, les moyens de comparaison délivrent 6 signaux $B_1$, $B_2$, $B_3$, $B_4$, $B_5$ et $B_6$, représentés sur la figure 9 qui prennent la valeur 0 quand la valeur instantanée du signal S est inférieure respectivement à la valeur des seuils $-L_j^{a=2}$, $-L_j^{a=1}$, $-L_j^{a=0}$, $L_j^{a=0}$, $L_j^{a=1}$, $L_j^{a=2}$, et une valeur égale à 1 quand cette valeur instantanée est supérieure respectivement à ces mêmes valeurs de seuils. Puis les 2m signaux Bj, délivrés par les moyens 11 de comparaison, sont combinés dans l'opérateur logique 12 effectuant l'opération Booléenne suivante :

(NON $B_1$) OU ($B_2$ ET NON $B_3$) OU ($B_4$ ET NON $B_5$) OU $B_6$ pour donner le signal V2 représenté sur la figure 10, déphasé du signal V1 d'une valeur angulaire de $\pi/2m*2n$, soit $\pi/24$.

Il est possible de constater, dans certains cas en raison de la vitesse des bascules des moyens de multiplexage, que les parties du signal S correspondant aux transitoires de commutation qui relient entre eux les 2n segments du signal S issus des 2n signaux sinusoïdaux Si, produisent, par l'intermédiaire des moyens des comparaison 11 et l'opérateur logique 12, des changements d'états transitoires aux angles correspondants, créant des artefacts en milieu de créneau du signal $V_2$. Dans l'exemple particulier où n=2, les artefacts apparaissent, comme le montre la figure 10, aux angles $\Theta1 = \pi/4$, $83 = 3\pi/4$, $\Theta5 = 5\pi/4$ et $\Theta7 = 7\pi/4$.

Afin de supprimer les artefacts du signal $V_2$, les 2n signaux $S_i$ sinusoïdaux, issus des moyens de génération 3 et déphasés de $\pi/n$, sont comparés chacun, dans des moyens 13, au seuil $L_j^{a=m-1}$ pour délivrer 2n signaux rectangulaires $C_i$, avec i entier compris entre 1 et 2n, correspondant respectivement aux comparaisons des 2n signaux S1, S2, ... S2n avec le seuil $L_j^{a=m-1}$, qui prennent une valeur 1 quand la valeur du signal Si correspondante est supérieure à la valeur de seuil $L_j^{a=m-1}$ et la valeur 0 quand la valeur du signal Si correspondante est inférieure à ce même seuil.

La figure 11 est la représentation graphique de ces 2n signaux dans le cas où n=2, constituée par quatre signaux $C_1$ à $C_4$.

Un opérateur logique 14 opère ensuite sur ces signaux issus des moyens 13 de comparaison, une opération booléenne selon la formule suivante:

($C_1$ ET $C_2$) OU... ($C_i$ ET $C_{i+1}$) OU ($C_{i+1}$ ET $C_{i+2}$) ... OU ($C_{2n-1}$ ET $C_{2n}$) OU ($C_{2n}$ ET $C_1$) afin de délivrer un signal $V_3$ constitué par une série de 2n créneaux, de même état binaire et de même valeur angulaire que les créneaux du signal $V_2$ et centrés précisément sur les créneaux du signal $V_2$ perturbés par les artefacts, aux angles $\Theta_1$, $\Theta_3$, $\Theta_5$ et $\Theta_7$. La figure 12 montre le signal $V_3$ obtenu en sortie de l'opérateur Booléen 14, dans le cas particulier où n est égal à 2 avec l'opération logique :

($C_1$ ET $C_2$) OU ($C_2$ ET $C_3$) OU ($C_3$ ET $C_4$) OU ($C_4$ ET $C_1$) Ces deux signaux logiques $V_2$ et $V_3$ sont combinés dans un troisième opérateur logique (OU) 15 pour donner le signal de sortie $V_4$ sur une seconde voie du dispositif de multiplication de résolution. Ce signal de sortie $V_4$ haute résolution est comme le signal $V_1$, composé de 2m*n périodes d'un signal carré, dans l'intervalle d'une période $(0,2\pi)$ du signal issus d'un des capteurs analogiques 1 ou 2 et est déphasé de $\pi/(2m*2n)$ par rapport au signal $V_1$.

La figure 13 représente le signal $V_4$ dans le cas particulier où n est égal à 2 et m est égal à 3, déphasé d'une valeur de $\pi/24$ par rapport au signal $V_1$ représenté en figure 7. la combinaison des signaux $V_1$ et $V_4$ par un opérateur logique (OU EXCLUSIF), non représenté sur la figure 1, peut selon l'art antérieur, donner un signal de sortie unique à résolution double de l'un ou l'autre des signaux $V_1$ ou $V_4$.

Dans certains cas, il peut être intéressant de choisir une valeur du nombre n de signaux générés suffisamment élevée pour que la valeur de l'enveloppe maximale E soit considérée comme constante et égale à l'amplitude A des deux signaux sinusoïdaux issus des deux capteurs analogiques, avec $\in$ pour écart maximum entre l'enveloppe E et l'amplitude constante A défini, en pourcentage par rapport à A, par:

$$\in = [1- \cos\pi/2n]*100.$$

Par exemple, pour n = 8, $\in\% = 1.9\%$

Si l'écart $\in$ est suffisamment petit et en relation avec la précision demandée aux signaux de sortie, les valeurs des seuils de commutation $L_i$ et $L_j$ s'expriment par :

$$L_i = {}^+\!\_2a/2m * E * \sin(\pi/2n)$$

$$L_j = {}^+\!\_(2a+1)/2m * E * \sin(\pi/2n)$$

a et m ayant les mêmes définitions que précédemment.

Pour travailler sur des niveaux de tension élevés, on peut amplifier les signaux de sortie des capteurs analogiques et les niveaux des seuils de commutation dans le même rapport d'amplification. Il peut être avantageux de créer un nombre de signaux sinusoïdaux supérieur à 2n pour établir une enveloppe maximale E avec une bonne précision et, par contre, de n'utiliser que 2n signaux pour établir le signal S en sortie des moyens de multiplexage.

**Revendications**

1. Dispositif de multiplication de résolution et de détermination du sens de déplacement d'un capteur de vitesse et de déplacement, constitué par un codeur magnétique multipolaire mobile en face d'au moins deux capteurs analogiques fixes, délivrant des signaux sinusoïdaux d'amplitudes maximales égales, centrés sur une même valeur de référence, déphasés de $\pi/2$ radians électriques, **caractérisé en ce qu'**il comprend :

   - des moyens (3) de génération de 2n signaux sinusoïdaux ($S_i$), de même amplitude (A), de même valeur de centrage que les signaux délivrés par les capteurs analogiques (1 et 2), déphasés de $\pi/n$ les uns par rapport aux autres, n étant un nombre entier positif supérieur ou égal à 2;
   - des moyens (5) de multiplexage analogique des 2n signaux ($S_i$) délivrant un signal (S) constitué par la succession de 2n portions de signaux ($S_i$) déphasés de $\pi/n$ et dont l'amplitude est comprise entre deux valeurs: $A * \sin(-\pi/2n)$ et $A * \sin(\pi/2n)$;
   - des moyens (6) de saisie de l'enveloppe maximale (E) des 2n signaux ($S_i$);
   - des premiers (7) et des seconds (10) moyens de génération de respectivement (2m-1) seuils ($L_i$) et ($-L_i$) et 2m seuils ($L_j$) et ($-L_j$) de commutation proportionnels à l'enveloppe (E), m étant un nombre entier positif choisi en fonction de la résolution finale désirée;
   - des premiers (8) et seconds (11) moyens de comparaison du signal (S) avec respectivement chacun des seuils ($L_i$), ($-L_i$) et ($L_j$), ($-L_j$) issus des premiers (7) et seconds (10) moyens de génération, délivrant des signaux binaires ($A_i$) et ($B_j$);
   - des premiers (9) et des seconds (12) moyens de combinaison des signaux binaires ($A_i$) et ($B_j$) délivrant respectivement un signal ($V_1$) et ($V_2$), déphasés angulairement de $\pi/4m*n$, constitué chacun de 2m*n périodes d'angle $\pi/m*n$ dans l'intervalle d'une période (0,2$\pi$) de l'un ou l'autre des signaux issus des capteurs analogiques.

2. Dispositif selon la revendication 1, **caractérisé en ce que** les premiers moyens (7) de génération de seuils de commutation génèrent une série de (2m-1) premiers seuils de commutation constituée des seuils ($L_i$) définis par la formule : $L_i = E * tg[\pi/2n * 2a/2m]$ et des seuils ($-L_i$) symétriques des seuils ($L_i$) par rapport à la valeur de référence, m étant un nombre entier positif choisi en fonction de la résolution finale désirée, et a étant un nombre entier positif prenant toutes les valeurs de 0 et (m-1) compris.

3. Dispositif selon les revendications 1 et 2, **caractérisé en ce que** les premiers moyens (8) de comparaison du signal (S) avec chacun des (2m-1) seuils ($-L_i$) et ($L_i$) issus des premiers moyens (7) de génération, délivrent (2m-1) signaux binaires ($A_i$), de ($A_1$) à ($A_{2m-1}$) correspondant respectivement à la comparaison du signal (S) avec chacun des seuils ($-L_i$) et ($L_i$) pris dans l'ordre croissant du seuil ($-L_i$) de plus bas niveau au seuil ($L_i$) de plus haut niveau, et qui prennent respectivement la valeur 0 quand la valeur instantanée du signal (S) est inférieure au seuil de comparaison considéré, et la valeur 1 quand cette valeur instantanée est supérieure respectivement à cette même valeur de seuil.

4. Dispositif selon les revendications 1 à 3, **caractérisé en ce que** les premiers moyens (9) de combinaison des signaux binaires ($A_i$) délivrés par les premiers moyens (8) de comparaison sont constitués par un opérateur logique effectuant l'opération Booléenne : ($A_1$ ET NON $A_2$) OU...OU ($A_{2m-3}$ ET NON $A_{2m-2}$).OU $A_{2m-1}$ qui délivre un signal de sortie ($V_1$) haute résolution, sur une première voie de sortie du dispositif de multiplication de résolution, composé d'une série de 2m*n périodes d'un signal carré de $\pi/(m*n)$ de longueur de période.

5. Dispositif selon la revendication 1, **caractérisé en ce que** les seconds moyens (10) de génération de seuils de commutation génèrent une série de 2m seconds seuils de commutation, constituée des seuils ($L_j$) définis par la formule :

   $$L_j = E * tg[\pi/2n * (2a+1)/2m]$$

   et des seuils ($-L_j$), symétriques des seuils ($L_j$) par rapport à la valeur de référence, m étant un nombre entier positif choisi en fonction de la résolution finale désirée, et a étant un nombre entier positif prenant toutes les valeurs de 0 et (m-1) compris.

6. Dispositif selon les revendications 1 et 5, **caractérisé en ce que** les seconds moyens (11) de comparaison du signal (S) avec chacun des 2m seuils $(-L_j)$ et $(L_j)$ issus des seconds moyens (10) de génération, délivrent 2m signaux binaires $(B_j)$, de $(B_1)$ à $(B_{2m})$ correspondant respectivement à la comparaison du signal (S) avec chacun des seuils $(-L_j)$ et $(L_j)$ pris dans l'ordre croissant du seuil $(-L_j)$ de plus bas niveau au seuil $(L_j)$ de plus haut niveau, et qui prennent respectivement la valeur 0 quand la valeur instantanée du signal (S) est inférieure au seuil de comparaison considéré, et la valeur 1 quand cette valeur instantanée est supérieure respectivement à cette même valeur de seuil.

7. Dispositif selon les revendications 1, 5 et 6, **caractérisé en ce que** les seconds moyens (12) de combinaison des signaux binaires $(B_j)$ délivrés par les seconds moyens de comparaison (11) sont constitués par un opérateur logique effectuant l'opération Booléenne :

(NON $B_1$) OU ($B_2$ ET NON $B_3$) OU ... OU ($B_{2m-2}$ ET NON $B_{2m-1}$) OU $B_{2m}$ qui délivre un signal de sortie $(V_2)$ haute résolution, sur une seconde voie de sortie du dispositif de multiplication de résolution, composé d'une série de 2m*n périodes d'un signal carré de $\pi/m*n$ de longueur de période.

8. Dispositif selon la revendication 7, **caractérisé en ce que**, lorsque le signal (S) transite entre deux portions voisines des signaux $(S_i)$ et produit par l'intermédiaire des moyens de comparaison (11) et des moyens (12) de combinaison, aux angles correspondant à ces transitions, des artefacts au milieu des créneaux espacés de $\pi/n$ du signal de sortie $(V_2)$:

- les signaux $(S_i)$ sinusoïdaux issus des moyens de génération (3) sont comparés chacun au seuil $(L_j)$ de plus haut niveau pour lequel a est égal à (m-1), dans des troisièmes moyens (13) de comparaison, pour délivrer 2n signaux rectangulaires $(C_1)$ à $(C_{2n})$ correspondant respectivement à la comparaison des signaux $(S_i)$ de $(S_1)$ à $(S_{2n})$ audit seuil, et qui prennent la valeur 0 quand la valeur instantanée du signal $(S_i)$ est inférieure au seuil de comparaison et la valeur 1 quand cette valeur instantanée est supérieure respectivement à cette valeur de seuil;
- un opérateur logique (14) effectue sur ces signaux $(C_i)$ issus des moyens (13) de comparaison, l'opération booléenne:

$(C_1$ ET $C_2)$ ... OU $(C_i$ ET $C_{i+1})$ OU $(C_{i+1}$ ET $C_{i+2})$ ... OU$(C_{2n}$ ET $C_1)$ délivrant un signal $(V_3)$ constitué par une série de 2n créneaux es-pacés de $\pi/n$ et centrés précisément sur les créneaux du signal $(V_2)$ présentant un artefact;

- un troisième opérateur logique OU (15) combinant ces deux signaux logiques $(V_2)$ et $(V_3)$ selon l'opération logique: $(V_2)$ OU $(V_3)$, pour donner un signal de sortie $(V_4)$ sur une seconde voie du dispositif présentant 2m*n périodes d'un signal carré de $\pi/m*n$ de longueur de période.

9. Dispositif selon la revendication 1, **caractérisé en ce que** les moyens de génération (3) génèrent, en plus des 2n signaux $(S_i)$, des signaux sinusoïdaux de même amplitude A, centrés sur la même origine que les signaux $(S_i)$, ces signaux supplémentaires et les 2n signaux $(S_i)$ étant régulièrement déphasés et **en ce que** les moyens de saisie (6) saisissent pour enveloppe (E) l'enveloppe maximale de l'ensemble de ces signaux supplémentaires et des 2n signaux $(S_i)$.

10. Dispositif selon la revendication 9, **caractérisé en ce que** les premiers moyens (7) de génération de seuils génèrent une première série de seuils $(L_i)$ et $(-L_i)$ définis par la formule

$$L_i = 2a/2m * E \sin \pi/2n$$

lorsque la valeur de l'enveloppe (E) saisie par les moyens (6) de saisie sur un nombre élevé de signaux sinusoïdaux peut être considérée comme constante et égal à A en relation avec la précision de sortie demandée, m étant un nombre entier positif choisi en fonction de la résolution finale désirée et a étant un nombre entier positif prenant toutes les valeurs de 0 à (m-1).

11. Dispositif selon la revendication (1) ou (1 et 9) **caractérisé en ce que** les premiers moyens (7) de génération de seuils génèrent une deuxième série de seuils $(L_j)$ et $(-L_j)$ définis par la formule

$$L_j = (2a+1)/2m * E \sin \pi/2n$$

lorsque la valeur de l'enveloppe (E) saisie par les moyens (6) de saisie sur un nombre élevé de signaux sinusoïdaux peut être considérée comme constante et égale à A en relation avec la précision de sortie demandée, m étant un nombre entier positif choisi en fonction de la résolution finale désirée et a étant un nombre entier positif prenant toutes les valeurs de 0 à (m-1).

12. Dispositif selon la revendication 1, **caractérisé en ce que** le signe du déplacement du codeur magnétique est fixé définitivement en identifiant la succes-

sion des signaux sinusoïdaux $(S_i)$ apparaissant pour un sens de déplacement de 0 à $2\pi$ radians choisis conventionnellement par rapport aux situations géométriques des deux capteurs analogiques (1 et 2).

13. Dispositif selon les revendications 2 et 5, **caractérisé en ce que** les moyens de génération de seuils peuvent être réalisées par des diviseurs de tension.

**Patentansprüche**

1. Vorrichtung zur Vervielfachung der Auflösung und Bestimmung der Richtung der Lageveränderung eines Geschwindigkeits- und Lageveränderungssensors, der durch einen mobilen multipolaren magnetischen Kodierer gebildet wird, der zumindest zwei festen analogen Sensoren gegenüberliegt, welche sinusförmige Signale gleicher maximaler Amplituden liefern, die um einen selben Referenzwert zentriert sind, die um $\pi/2$ elektrische Radianten phasenverschoben sind, **dadurch gekennzeichnet, daß** sie aufweist:

   - Erzeugungsmittel (3) zum Erzeugen von 2n sinusförmigen Signalen $(S_i)$ derselben Amplitude (A) desselben Zentrierungswertes wie die Signale, die durch die analogen Sensoren (1 und 2) geliefert werden, wobei die einen im Verhältnis zu den anderen um $\pi/n$ phasenverschoben sind, wobei n eine positive ganze Zahl gleich oder größer 2 ist;
   - Multiplexmittel (5) zum analogen Multiplexen der 2n Signale $(S_i)$, welche ein Signal (S) liefern, das durch die Folge von 2n Signalabschnitten $(S_i)$ gebildet wird, die um $\pi/n$ phasenverschoben sind und deren Amplitude zwischen zwei Werten liegt: $A * \sin(-\pi/2n)$ und $A * \sin(\pi/2n)$;
   - Erfassungsmittel (6) zum Erfassen der maximalen Einhüllenden (E) der 2n Signale $(S_i)$;
   - erste (7) und zweite (10) Erzeugungsmittel zum Erzeugen von (2m-1) Umwandlungsschwellwerten $(L_i)$ und $(-L_i)$ bzw. von 2m Umwandlungsschwellwerten $(L_j)$ und $(-L_j)$, die zur Einhüllenden (E) proportional sind, wobei m eine ganze positive Zahl ist, die in Abhängigkeit von der gewünschten endgültigen Auflösung gewählt wird;
   - erste (8) und zweite (11) Vergleichsmittel zum Vergleichen des Signals (S) mit jedem der Schwellwerte $(L_i)$, $(-L_i)$ bzw. $(L_j)$, $(-L_j)$, die von den ersten (7) und den zweiten (10) Erzeugungsmitteln ausgesandt werden, welche binäre Signale $(A_i)$ und $(B_j)$ liefern;
   - erste (9) und zweite (12) Kombinationsmittel zum Kombinieren der binären Signale $(A_i)$ und $(B_j)$, welche ein Signal $(V_1)$ bzw. $(V_2)$ liefern, die winkelmäßig um $\pi/4m*n$ phasenverschoben sind, wobei jedes aus $2m*n$ Winkelperioden $\pi/m*n$ im Intervall einer Periode $(0,2\pi)$ des einen oder des anderen Signals, die von den analogen Sensoren ausgesandt werden, gebildet ist.

2. Vorrichtung nach Anspruch 1, **dadurch gekennzeichnet, daß** die ersten Erzeugungsmittel (7) zum Erzeugen von Umwandlungsschwellwerten eine Reihe von (2m-1) ersten Umwandlungsschwellwerten erzeugen, die aus Schwellwerten $(L_i)$ gebildet sind, die durch die Formel definiert sind:

$$L_i = E * tg[\pi/2n * 2a/2m]$$

und aus Schwellwerten $(-L_i)$, die zu den Schwellwerten $(L_i)$ bezüglich des Referenzwertes symmetrisch sind, wobei m eine ganze positive Zahl ist, die in Abhängigkeit von der gewünschten endgültigen Auflösung gewählt ist, und a eine ganze positive Zahl ist, die alle Werte, die zwischen 0 und (m-1) enthalten sind, annimmt.

3. Vorrichtung nach Anspruch 1 und 2, **dadurch gekennzeichnet, daß** die ersten Vergleichsmittel (8) zum Vergleichen des Signals (S) mit jedem der (2m-1) Schwellwerte $(-L_i)$ und $(L_i)$, die von den ersten Erzeugungsmitteln (7) ausgesandt werden, (2m-1) binäre Signale $(A_i)$ von $(A_1)$ bis $(A_{2m-1})$ liefern, die dem Vergleich des Signals (S) mit jedem der Schwellwerte $(-L_i)$ bzw. $(L_i)$ in ansteigender Reihenfolge vom Schwellwert $(-L_i)$ des untersten Niveaus zum Schwellwert $(L_i)$ des höchsten Niveaus entsprechen und den Wert 0 annehmen, wenn der momentane Wert des Signals (S) niedriger ist als der betrachtete Vergleichsschwellwert, bzw. den Wert 1 annehmen, wenn dieser momentane Wert jeweils höher ist als dieser selbe Schwellwert.

4. Vorrichtung nach den Ansprüchen 1 bis 3, **dadurch gekennzeichnet, daß** die ersten Kombinationsmittel (9) zum Kombinieren der binären Signale $(A_i)$, die durch die ersten Vergleichsmittel (8) geliefert werden, durch einen logischen Operator gebildet sind, der die Boolésche Operation bewirkt:

$(A_1$ UND NICHT $A_2)$ ODER...ODER $(A_{2m-3}$ UND NICHT $A_{2m-2})$ ODER $A_{2m-1}$, welche ein Ausgangssignal $(V_1)$ hoher Auflösung auf einer ersten Ausgangsspur der Vorrichtung zur Vervielfachung der Auflösung liefert, das aus einer Reihe von $2m*n$ Perioden eines Rechtecksignals mit einer Periodenlänge von $\pi/(m*n)$ gebildet ist.

5. Vorrichtung nach Anspruch 1, **dadurch gekenn-**

**zeichnet, daß** die zweiten Erzeugungsmittel (10) zum Erzeugen von Umwandlungsschwellwerten eine Reihe von 2m zweiten Umwandlungsschwellwerten erzeugen, die aus Schwellwerten $(L_j)$ gebildet sind, die durch die Formel definiert sind:

$$L_j = E * tg[\pi/2n * (2a+1)/2m]$$

und aus Schwellwerten $(-L_j)$, die zu den Schwellwerten $(L_j)$ bezüglich des Referenzwertes symmetrisch sind, wobei m eine ganze positive Zahl ist, die in Abhängigkeit von der gewünschten endgültigen Auflösung gewählt ist, und a eine ganze positive Zahl ist, die alle Werte, die zwischen 0 und (m-1) enthalten sind, annimmt.

6. Vorrichtung nach Anspruch 1 und 5, **dadurch gekennzeichnet, daß** die zweiten Vergleichsmittel (11) zum Vergleichen des Signals (S) mit jedem der 2m Schwellwerte $(-L_j)$ und $(L_j)$, die von den zweiten Erzeugungsmitteln (10) ausgesandt werden, 2m binäre Signale $(B_j)$ von $(B_1)$ bis $(B_{2m})$ liefern, die dem Vergleich des Signals (S) mit jedem der Schwellwerte $(-L_j)$ bzw. $(L_j)$, in ansteigender Reihenfolge vom Schwellwert $(-L_j)$ des untersten Niveaus zum Schwellwert $(L_j)$ des höchsten Niveaus, entsprechen, und die den Wert 0 annehmen, wenn der momentane Wert des Signals (S) niedriger ist als der betrachtete Vergleichsschwellwert, bzw. den Wert 1 annehmen, wenn dieser momentane Wert jeweils höher ist als dieser selbe Schwellwert.

7. Vorrichtung nach den Ansprüchen 1, 5 und 6, **dadurch gekennzeichnet, daß** die zweiten Kombinationsmittel (12) zum Kombinieren der binären Signale $(B_j)$, die durch die zweiten Vergleichsmittel (11) geliefert werden, durch einen logischen Operator gebildet sind, der die Boolésche Operation bewirkt:
(NICHT $B_1$) ODER ($B_2$ UND NICHT $B_3$) ODER ... ODER ($B_{2m-2}$ UND NICHT $B_{2m-1}$) ODER $B_{2m}$, welche ein Ausgangssignal $(V_2)$ hoher Auflösung auf einer zweiten Ausgangsspur der Vorrichtung zur Vervielfachung der Auflösung liefert, das aus einer Reihe von 2m*n Perioden eines Rechtecksignals mit einer Periodenlänge von $\pi/m*n$ gebildet ist.

8. Vorrichtung nach Anspruch 7, **dadurch gekennzeichnet, daß**, wenn zwischen zwei benachbarten Abschnitten der Signale $(S_i)$ ein Übergang des Signals (S) stattfindet und mittels der Vergleichsmittel (11) und der Kombinationsmittel (12) bei Winkeln, die diesen Übergängen entsprechen, Artefakte in der Mitte der um $\pi/n$ vom Ausgangssignal $(V_2)$ beabstandeten Spannungsspitzen durch das Signal (S) erzeugt werden:

- die sinusförmigen Signale $(S_i)$, die von den Erzeugungsmitteln (3) ausgesandt werden, jeweils mit dem Schwellwert $(L_j)$ des höchsten Niveaus, für den a gleich (m-1) ist, in den dritten Vergleichsmitteln (13) verglichen werden, um 2n Rechtecksignale $(C_1)$ bis $(C_{2n})$ zu liefern, die jeweils dem Vergleich der Signale $(S_i)$ von $(S_1)$ bis $(S_{2n})$ mit dem Schwellwert entsprechen, und die den Wert 0 annehmen, wenn der momentane Wert des Signals $(S_i)$ niedriger ist als der Vergleichsschwellwert, und den Wert 1, wenn dieser momentane Wert jeweils größer ist als dieser Schwellwert;
- ein logischer Operator (14) auf diese Signale $(C_i)$, die von den Vergleichsmitteln (13) ausgeführt werden, die Boolésche Operation ausführt: $(C_1$ UND $C_2$ ... ODER $(C_i$ UND $C_{i+1})$ ODER $(C_{i+1}$ UND $C_{i+2})$ ... ODER $(C_{2n}$ UND $C_1)$

wobei ein Signal $(V_3)$ geliefert wird, das durch eine Reihe von 2n Spannungsspitzen gebildet ist, die um $\pi/n$ voneinander entfernt sind und präzise auf den Spannungsspitzen des Signals $(V_2)$ zentriert sind, die ein Artefakt darstellen;

- ein dritter logischer Operator ODER (15) diese zwei logischen Signale $(V_2)$ und $(V_3)$ gemäß der logischen Operation kombiniert: $(V_2)$ ODER $(V_3)$, um ein Ausgangssignal $(V_4)$ auf einer zweiten Spur der Vorrichtung zu liefern, das 2m*n Perioden eines Rechtecksignals mit einer Periodenlänge von $\pi/m*n$ darstellt.

9. Vorrichtung nach Anspruch 1, **dadurch gekennzeichnet, daß** die Erzeugungsmittel (3) über die 2n Signale $(S_i)$ hinaus sinusförmige Signale derselben Amplitude A erzeugen, die um denselben Ursprung wie die Signale $(S_i)$ zentriert sind, wobei diese Zusatzsignale und die 2n Signale $(S_i)$ regelmäßig phasenverschoben sind, und dadurch, daß die Erfassungsmittel (6) zum Erfassen der Einhüllenden (E) die maximale Einhüllende der Gesamtheit dieser Zusatzsignale und der 2n Signale $(S_i)$ erfassen.

10. Vorrichtung nach Anspruch 9, **dadurch gekennzeichnet, daß** die ersten Erzeugungsmittel (7) zum Erzeugen von Schwellwerten eine erste Reihe von Schwellwerten $(L_i)$ und $(-L_i)$ erzeugen, die durch die Formel definiert sind:

$$L_i = 2a/2m * E \sin \pi/2n,$$

wenn der Wert der Einhüllenden (E), der durch die Erfassungsmittel (6) über eine hohe Anzahl von sinusförmigen Signalen erfaßt wird, im Verhältnis zur geforderten Ausgangspräzision als konstant und gleich A betrachtet werden kann, wobei m eine ganze positive Zahl ist, die in Abhängigkeit von der gewünschten endgültigen Auflösung gewählt ist, und a eine ganze positive Zahl ist, die alle Werte von 0 bis (m-1) annimmt.

11. Vorrichtung nach Anspruch (1) oder (1 und 9), **dadurch gekennzeichnet, daß** die ersten Erzeugungsmittel (7) zum Erzeugen der Schwellwerte eine zweite Reihe von Schwellwerten ($L_j$) und ($-L_j$) erzeugen, die durch die Formel definiert sind:

$$L_j = (2a+1)/2m * E \sin \pi/2n,$$

wenn der Wert der Einhüllenden (E), der durch die Erfassungsmittel (6) über eine hohe Anzahl von sinusförmigen Signalen erfaßt wird, im Verhältnis zur geforderten Ausgangspräzision als konstant und gleich A betrachtet werden kann, wobei m eine ganze positive Zahl ist, die in Abhängigkeit von der gewünschten endgültigen Auflösung gewählt ist, und a eine ganze positive Zahl ist, die alle Werte von 0 bis (m-1) annimmt.

12. Vorrichtung nach Anspruch 1, **dadurch gekennzeichnet, daß** das Vorzeichen der Lageveränderung des magnetischen Kodierers definitiv festgelegt ist, indem die Folge der sinusförmigen Signale ($S_i$) identifiziert wird, die für eine Richtung einer Lageveränderung von 0 bis $2\pi$ Radianten auftritt, die im Verhältnis zu den geometrischen Situationen der zwei analogen Aufnehmer (1 und 2) konventionell gewählt sind.

13. Vorrichtung nach den Ansprüchen 2 und 5, **dadurch gekennzeichnet, daß** die Erzeugungsmittel zum Erzeugen der Schwellwerte durch Spannungsteiler realisiert sein können.

**Claims**

1. Device for multiplying the resolution and determining the direction of movement of a speed and movement sensor, composed of a mobile, multi-polar, magnetic encoder, opposite at least two fixed analogue sensors, supplying sinusoidal signals of equal maximum amplitudes, centred on a same reference value, offset by $\pi/2$ electrical radians, **characterised in that** it comprises:

- means (3) for generating $2\pi$ sinusoidal signals ($S_i$), of the same amplitude (A), of the same centring value as the signals supplied by the analogue sensors (1 and 2), offset by $\pi/n$ with respect to one another, n being the positive whole number greater than or equal to 2;
- means (5) for analogue multiplexing the $2\pi$ signals ($S_i$) providing a signal (S) composed by the succession of $2\pi$ portions of signals ($S_i$) offset by $\pi/n$ and whose amplitude is between two values: $A * \sin(-\pi/2n)$ and $A*\sin(\pi/2n)$;
- means (6) for entering the maximum envelope (E) of the 2n signals ($S_i$) ;
- first (7) and second (10) generation means respectively (2m-1) thresholds ($L_i$) and ($-L_i$) and 2m thresholds ($L_j$) and ($-L_j$) for switching proportional to the envelope (E), m being a positive whole number chosen according to the final resolution desired;
- first (8) and second (11) means for signal comparison (S) with respectively each of the thresholds ($L_i$), ($-L_i$) and ($L_j$), ($-L_j$) issued from the first (7) and the second (10) generation means, supplying binary signals ($A_i$) and ($B_j$);
- first (9) and second (12) means of combining the binary signals ($A_i$) and ($B_j$) respectively supplying a signal ($V_1$) and ($V_2$), angularly offset by $\pi/4m*n$, each composed of 2m*n periods of angle $\pi/m*n$ in the interval of a period ($0.2\pi$) of one or the other of the signals issued from the analogue sensors.

2. Device of claim 1, **characterised in that** the first means (7) of generating switching thresholds generate a series of (2m-1) first switching thresholds composed of thresholds ($L_i$) defined by the formula: $L_i = E * tg\{\pi/2n * 2a/2m\}$ and thresholds ($-L_i$) symmetrical to the thresholds ($L_i$) with respect to the reference value, m being a positive whole number chosen according to the final resolution desired, and a being a positive whole number including all values from 0 to (m-1) included.

3. Device of claims 1 and 2, **characterised in that** the first means (8) for signal comparison (S) with each of the (2m-1) thresholds ($-L_i$) and ($L_i$) issued from the first generation means (7), supply (2m-1) binary signals ($A_i$), from ($A_i$) to ($A_{2m-1}$) respectively corresponding to the comparison of the signal (S) with each of the thresholds ($-L_i$) and ($L_i$) taken in ascending order from the threshold ($-L_i$) of the lowest level to the threshold ($L_i$) of the highest level, and which respectively take the value 0 when the instantaneous value of the signal (S) is lower than the comparison threshold considered, and the value 1 when this instantaneous value is respectively greater than this same threshold value.

4. Device of claims 1 to 3 **characterised in that** the first means (9) for combining binary signals ($A_i$) supplied by the first comparison means (8) are composed by a logic operator performing the Boolean operation: ($A_1$ AND NOT $A_2$) OR ... OR ($A_{2m-3}$ AND NOT $A_{2m-2}$). OR $A_{2m-1}$ which supplies a high resolution output signal ($V_1$) on a first output channel of the resolution multiplying device, composed of a series of 2m*n periods of a squared signal of $\pi/(m*n)$ period length.

5. Device of claim 1, **characterised in that** the second means (10) for generating switching thresholds generate a series of 2m second switching thresholds, composed of thresholds ($L_j$) defined by the formula: $L_j = E * tg\{\pi/2n * (2a+1)/2m\}$, and thresholds ($-L_j$) symmetrical to the thresholds ($L_j$) with respect to the reference value, m being a positive whole number chosen according to the final resolution desired, and a being a positive whole number including all values from 0 to (m-1) included.

6. Device of claims 1 to 5, **characterised in that** the second means (11) for signal comparison (S) with each of the 2m-1 thresholds ($-L_j$) and ($L_j$) issued from the second generation means (10), supply 2m binary signals ($B_j$), from ($B_1$) to ($B_{2m}$) respectively corresponding to the comparison of the signal (S) with each of the thresholds ($-L_j$) and ($L_j$) taken in ascending order from the threshold ($-L_j$) of the lowest level to the threshold ($L_j$) of the highest level, and which respectively take the value 0 when the instantaneous value of the signal (S) is lower than the comparison threshold considered, and the value 1 when this instantaneous value is respectively greater than this same threshold value.

7. Device of claims 1, 5 and 6, **characterised in that** the second means (12) for combining binary signals ($B_j$) supplied by the second comparison means (11) are composed by a logic operator performing the Boolean operation: (NOT $B_1$) OR ($B_2$ AND NOT $B_3$) OR ... ($B_{2m-2}$ AND NOT $B_{2m-1}$) OR $B_{2m}$ which supplies a high resolution output signal ($V_2$) on a second output channel of the resolution multiplying device, composed of a series of 2m*n periods of a squared signal of $\pi/(m*n)$ period length.

8. Device of claim 7, **characterised in that** when the signal (S) transits between two adjacent portions of the signals (Si) and produces via the comparison means (11) and the combination means (12), at angles corresponding to these transitions, artefacts in the middle of the spaces distant by $\pi/N$ of the output signal ($V_2$) :

- the sinusoidal signals ($S_i$) issued from the generation means (3) are each compared with the highest level threshold ($L_j$) for which a is equal to (m-1), in third comparison means (13) to supply 2n rectangular signals ($C_1$) to ($C_{2n}$) respectively corresponding to the comparison of the signals ($S_i$) from ($S_1$) to ($S_{2n}$) at the said threshold, and which take the value 0 when the instantaneous value of the signal ($S_i$) is lower than

the comparison threshold considered, and the value 1 when this instantaneous value is respectively greater than this same threshold value.

- a logic operator (14) performs the following Boolean operation on these signals ($C_i$) issued from the comparison means: ($C_1$ AND $C_2$) ... OR ($C_{i+1}$) OR ($C_{i+1}$ AND $C_{i+2}$) ... OR ($C_{2n}$ AND $C_1$) which supplies a signal ($V_3$) composed by a series of 2n spaces distant by $\pi/n$ and centred precisely on the spaces of the signal ($V_2$) with an artefact;

- a third logic operator OR (15) combining these two logic signals ($V_2$) and ($V_3$) according to the logic operation: ($V_2$) OR ($V_3$) to provide an output signal ($V_4$) on a second channel of the device with 2m*n periods of a squared signal of $\pi/m*n$ period length.

9. Device of claim 1, **characterised in that** the generation means (3) generate, in addition to the 2n signals ($S_i$), sinusoidal signals of the same amplitude A, centred on the same origin as the signals ($S_i$), these additional signals and the 2n signals ($S_i$) being regularly offset and **in that** the entry means (6) enter for the envelope (E) the maximum envelope of all of these additional signals and the 2n signals ($S_i$).

10. Device of claim 9, **characterised in that** the first threshold generation means (7) generate a first series of thresholds ($L_i$) and ($-L_i$) defined by the formula: $L_i = 2a/2m * E \sin \pi/2n$ when the value of the envelope (E) entered by the entry means (6) on a large number of sinusoidal signals can be considered as constant and equal to A in relation with the output precision demanded, m being a positive whole number chosen according to the final resolution desired and a being a positive whole number including all values from 0 to (m-1) included.

11. Device of claims (1) or (1 and 9) **characterised in that** the first threshold generation means (7) generate a second series of thresholds ($L_j$) and ($-L_j$) defined by the formula: $L_j = (2a+1)/2m * E \sin \pi/2n$ when the value of the envelope (E) entered by the entry means (6) on a large number of sinusoidal signals can be considered as constant and equal to A in relation with the output precision demanded, m being a positive whole number chosen according to the final resolution desired and a being a positive whole number including all values from 0 to (m-1) included.

12. Device of claim 1, **characterised in that** the sign of the magnetic encoder movement is permanently fixed in identifying the succession of sinusoidal signals ($S_i$) which appear for a direction of movement

from 0 to $2\pi$ radians conventionally selected with respect to the geometrical locations of the two analogue sensors (1 and 2).

13. Device of claims 2 and 5, **characterised in that** the threshold generation means can be made using voltage splitters.

_FIG_1_

EP 0 929 795 B1

FIG_2

FIG_3a  $S_3 < S_2 < S_1$

FIG_3b  $S_4 < S_3 < S_2$

FIG_3c  $S_1 < S_4 < S_3$

FIG_3d  $S_2 < S_1 < S_4$

FIG_4

FIG_5

FIG_6

FIG_7

FIG_8

FIG_9

FIG_10

FIG_11

FIG_12

FIG_13

16